# EUROPÄISCHE PATENTSCHRIFT

(11) **EP 2 660 627 B1**
(45) Veröffentlichungstag und Bekanntmachung des Hinweises auf die Patenterteilung: **05.11.2014**
(21) Anmeldenummer: 13158221.5
(22) Anmeldetag: 07.03.2013
(51) Int. Cl.: G01S 15/93, B60R 19/48, G01S 7/521

(54) **Sensoranordnung umfassend eine flächige Fahrzeugkomponente und einen Ultraschallsensor**
Sensor assembly comprising a flat vehicle component and an ultrasound sensor
Ensemble de détection comprenant un composant de véhicule plat et un capteur à ultrasons

(30) Priorität: 30.04.2012 DE 102012207160
(43) Veröffentlichungstag der Anmeldung: 06.11.2013
(73) Patentinhaber: ROBERT BOSCH GMBH, 70442 Stuttgart (DE)
(72) Erfinder: Bartylla, David, 71229 Leonberg (DE)

(56) Entgegenhaltungen:
- DE-A1- 19 719 519
- DE-A1-102008 016 558

## Beschreibung

### Stand der Technik

Die Erfindung betrifft eine Sensoranordnung umfassend eine flächige Fahrzeugkomponente und einen Ultraschallsensor, wobei der Ultraschallsensor eine Membran umfasst, die lösbar mit der flächigen Fahrzeugkomponente verbunden ist und wobei die flächige Fahrzeugkomponente im Bereich des Ultraschallsensors eine reduzierte Materialstärke aufweist.

In modernen Fahrzeugen werden verschiedene Fahrassistenzsysteme eingesetzt, die mit Hilfe von Daten über die Umgebung des Fahrzeugs den Fahrer bei der Durchführung verschiedener Fahrmanöver unterstützen. Zur Erfüllung ihrer Aufgaben benötigen die genannten Systeme ein genaues Abbild der Umgebung des Fahrzeugs. Dieses Abbild der Umgebung wird mit verschiedenen Sensoren erzeugt, insbesondere werden Ultraschallsensoren zur Abstandsmessung von Hindernissen genutzt. Die Sensoren sind in der Regel in einer Höhe am Fahrzeug befestigt, die etwa dem Stoßfängerbereich entspricht. Ein Nachteil dieser Anordnung ist, dass durch die Anbringung dieser Sensoren der optische Eindruck des Designs beeinträchtigt wird, gleichzeitig jedoch die Anforderungen der Nutzer an die visuelle Gestaltung des Fahrzeugs steigen. Zur Vermeidung dieser Nachteile werden die Ultraschallsensoren nach Möglichkeit verdeckt eingebaut.

Aus der WO 2007/036528 A1 ist eine Anordnung bekannt, bei der ein elektroakustischer Wandler, insbesondere ein Ultraschallwandler, an einer Innenseite einer Außenwand einer Fahrzeugkomponente angeordnet ist. Die Fahrzeugkomponente kann beispielsweise ein Stoßfänger sein. Dabei ist in einer Ausführungsform der Ultraschallwandler lösbar in einer Vertiefung des Stoßfängers angeordnet, wobei dieser mit Hilfe einer Halterung an die Innenseite des Stoßfängers angedrückt wird.

Aus der DE 10 2008 016 558 A1 ist ein Ultraschallsensor bekannt, der durch eine Halterung mit der Innenseite eines Stoßfängers verbunden ist. Die Membran des Ultraschallsensors liegt an einem Bereich des Stoßfängers mit reduzierter Wandstärke an. In dem Stoßfänger ist eine Entkopplungsstruktur zu den Bereichen mit dickerer Wand vorgesehen. Zwischen dem Halter und dem Sensorgehäuse ist zur Entkopplung ein Gummiring oder Elastomerring angeordnet. Die Membran des Ultraschallsensors wird vollflächig und unterbrechungsfrei mit dem Stoßfänger verbunden, insbesondere verklebt.

Aus der DE 197 19 519 A1 ist ein Ultraschallsensor bekannt, der mittels eines Halteteils von der Innenseite eines Stoßfängers eines Fahrzeugs an dem Stoßfänger befestigt wird. Dabei ist das Halteteil derart ausgebildet, dass das Kopfteil des Ultraschallsensors mit seiner Stirnseite im Wesentlichen bündig mit der benachbarten Außenfläche des Stoßfängers abschließt. Der Stoßfänger weist dabei eine Öffnung auf, so dass die schallabstrahlende Stirnfläche des Ultraschallsensors frei liegt.

Nachteilig an den bekannten Lösungen ist, dass die akustischen Eigenschaften der Ultraschallwandler durch die Fahrzeugkomponente, hinter der diese verdeckt eingebaut werden, negativ beeinflusst werden. Für optimale Schwingungseigenschaften muss die Resonanzfrequenz der Fahrzeugkomponente, beispielsweise der Stoßstange, exakt eingestellt werden. Dies erfordert eine Präzision bei der Fertigung, die sich nur mit unverhältnismäßig großem Aufwand erreichen lässt. Für eine gute akustische Kopplung ist es zudem üblich, die Membran des Ultraschallsensors flächig mit der Fahrzeugkomponente zu verkleben. Auf diese Weise kann zwar eine unterbrechungsfreie Verbindung erreicht werden, jedoch ist durch das Verkleben ein einfaches Austauschen eines defekten Ultraschallwandlers ausgeschlossen.

### Offenbarung der Erfindung

Erfindungsgemäß wird eine Sensoranordnung umfassend eine flächige Fahrzeugkomponente und ein Ultraschallsensor vorgeschlagen, wobei der Ultraschallsensor eine Membran umfasst, die lösbar mit der flächigen Fahrzeugkomponente verbunden ist, und wobei die flächige Fahrzeugkomponente im Bereich des Ultraschallsensors eine reduzierte Materialstärke aufweist, wobei die flächige Fahrzeugkomponente eine akustische Koppelplatte umfasst, die an den Ultraschallsensor angrenzt und dessen Membran punktförmig kontaktiert.

Bei der flächigen Fahrzeugkomponente kann es sich prinzipiell um jedes äußere Bauelement handeln, beispielsweise kann die Fahrzeugkomponente als Stoßstange ausgeführt sein, wenn der Ultraschallsensor nach vorne oder hinten ausgerichtet ist, oder die flächige Fahrzeugkomponente kann als Zierleiste ausgeführt sein, wenn der Ultraschallsensor zur Seite ausgerichtet ist. Weitere mögliche Ausführungsformen für die flächige Fahrzeugkomponente umfassen z.B. auch Lampen und Spiegel. Die flächige Fahrzeugkomponente wird an der Stelle, an der der Ultraschallsensor angeordnet wird, mit einer geringeren Materialstärke als in den restlichen Bereichen ausgeführt. Durch die reduzierte Materialstärke wird der Einfluss der flächigen Fahrzeugkomponente auf die akustischen Eigenschaften der Sensorenanordnung reduziert. Um die akustischen Eigenschaften der flächigen Fahrzeugkomponente an den Ultraschallsensor anzupassen, wird eine akustische Koppelplatte eingesetzt. Die Verbindung zwischen der akustischen Koppelplatte und der schwingenden Membran des Ultraschallsensors wird dabei nicht flächig, sondern punktförmig hergestellt. Dazu weist die akustische Koppelplatte eine Erhebung auf, welche die schwingende Membran des Ultraschallsensors erfindungsgemäß an dem Punkt kontaktiert, an dem die Amplitude der Schwingungen maximal ist. Da das Gesamtsystem aus flächiger Fahrzeugkomponente, akustischer Koppelplatte und Membran bei der punktförmigen Kontaktierung weniger steif ist als bei einer flächigen Kontaktierung, wird durch diese Anordnung die maximal erreichbare Schwingungsamplitude beim Senden vergrößert. Auch beim Empfangen von Ultraschallechos wirkt sich die punktförmige Kontaktierung der Membran vorteilhaft aus. Eine flächige Verklebung würde das Schwingen der Membran behindern, so dass das Piezoelement nur wenig gedehnt und nur ein kleines Signal erzeugt würde. Des Weiteren besteht bei der punkförmigen Kontaktierung ein definierter Auflagepunkt, wodurch die Auswirkungen von Fertigungstoleranzen vermindert werden.

Um den Ultraschallsensor in seiner Funktion nicht durch die verdeckte Anordnung zu beeinträchtigen, muss die Resonanzfrequenz der flächigen Fahrzeugkomponente auf den Ultraschallsensor abgestimmt sein. In der erfindungsgemäßen Sensoranordnung wird die Resonanzfrequenz der flächigen Fahrzeugkomponente durch die akustische Koppelplatte vorgegeben. Durch die akustische Koppelplatte wird die erste Resonanzfrequenz des Bereichs mit reduzierter Dicke der flächigen Fahrzeugkomponente in den Arbeitsbereich des Ultraschallsensors versetzt. Da die für den Ultraschallsensor relevanten akustischen Eigenschaften der Sensoranordnung durch die akustische Koppelplatte vorgegeben werden, werden an die Fertigungsgenauigkeit der flächigen Fahrzeugkomponente keine erhöhten Anforderungen mehr gestellt. Die Fertigung der Stoßstangen, der Zierleisten oder dergleichen wird dadurch vereinfacht und kostengünstiger.

Damit die Dicke der akustischen Koppelplatte klein bleibt, wird bevorzugt auf Werkstoffe mit niedriger Dichte und hohem Elastizitätsmodul zurückgegriffen. Bevorzugt wird ein keramisches Material als Werkstoff für die akustische Koppelplatte verwendet. Geeignete keramische Werkstoffe sind beispielsweise Aluminiumoxid, Siliziumcarbid oder Siliziumnitrid. Des Weiteren sind kohlenstofffaserverstärkte Kunststoffe als Werkstoff für die akustische Koppelplatte geeignet.

In einer Ausführungsform der Erfindung weist die flächige Fahrzeugkomponente am Übergang zum Bereich mit reduzierter Materialstärke eine Nut auf. Diese oder gegebenenfalls mehrere Nuten unterdrücken die Übertragung von Körperschall von der flächigen Fahrzeugkomponente auf den Ultraschallsensor. Eine Übertragung des Körperschalls auf den Ultraschallsensor ist unerwünscht, da dadurch Schwingungen im Ultraschallsensor angeregt würden, die nicht im Zusammenhang mit dem Messprozess stehen und diesen stören.

Über die Geometrie der Membran des Ultraschallsensors lässt sich dessen Abstrahlverhalten und insbesondere dessen Richtcharakteristik einstellen. In einer Ausführungsform der erfindungsgemäßen Sensoranordnung ist die Membran des Ultraschallsensors radialsymmetrisch, insbesondere kreisförmig, ausgeführt. Durch eine radialsymmetrische Ausführung der Membran ergibt sich ein Schwingungsprofil, welches gut geeignet ist, die Schwingung über einen punktförmigen Kontakt an die akustische Koppelplatte weiterzugeben. In weiteren Ausführungsformen ist die Membran zum Einstellen der Richtcharakteristik zum Beispiel elliptisch oder rechteckig ausgeführt.

In einer Ausführungsform der Sensoranordnung ist die Membran des Ultraschallsensors als Membrantopf ausgeführt. Der Membrantopf schließt den Ultraschallsensor ab und umgibt das Piezoelement, welches die Membran, die den Boden des Membrantopfs darstellt, in Schwingung versetzt.

In einer Ausführungsform umfasst die Sensoranordnung eine Halterung für den Ultraschallsensor, wobei die Halterung eingerichtet ist, den Ultraschallsensor gegen die akustische Koppelplatte zu drücken. Durch den Andruck der Halterung wird ein guter Kontakt zwischen der Membran des Ultraschallsensors und der akustischen Koppelplatte sichergestellt. Zwischen der Halterung und dem Gehäuse des Ultraschallsensors und/oder zwischen dem Membrantopf des Ultraschallsensors und dessen Gehäuse sind in einer Ausführungsform der Erfindung Entkopplungsringe eingesetzt. Die Entkopplungsringe sind aus einem nachgiebigen Material, beispielsweise einem Elastomer wie Silikon oder Silikongel gefertigt. Durch die Nachgiebigkeit der Entkopplungsringe passt sich der Abstand zwischen der Membran des Ultraschallsensors und der akustischen Koppelplatte selbstständig an. Des Weiteren wird verhindert, dass sich Körperschall über die Halterung auf den Ultraschallsensor überträgt.

In einer Ausführungsform der Sensoranordnung wird die Verbindung zwischen der Halterung und dem Ultraschallsensor über eine lösbare Schnappverbindung hergestellt. Dazu sind in der Halterung Ausnehmungen vorgesehen, in die an dem Gehäuse des Ultraschallsensors angeordnete Clips einrasten können. Die Befestigung mit Hilfe einer lösbaren mechanischen Schnappverbindung erlaubt es im Defektfall eines Ultraschallsensors diesen leicht auszuwechseln.

Selbstverständlich kann je nach Anforderung an die Sensoranordnung auch mehr als ein Ultraschallsensor an einer flächigen Fahrzeugkomponente angeordnet werden. Auch ist es denkbar, an einem Fahrzeug Ultraschallsensoren in mehreren verschiedenen flächigen Fahrzeugkomponenten unterzubringen. Beispielsweise können für eine Einparkhilfe drei Ultraschallsensoren in der vorderen Stoßstange, drei Ultraschallsensoren in der hinteren Stoßstange und an den Seiten des Fahrzeugs jeweils ein Ultraschallsensor in einer Zierleiste einer Tür angeordnet werden.

Die Erfindung betrifft des Weiteren ein Fahrzeug umfassend eine oder mehrere der erfindungsgemäßen Sensoranordnungen sowie ein Fahrassistenzsystem, welches mit mindestens einer Sensoranordnung verbunden ist. Wie soeben beschrieben kann es sich bei den Sensoranordnungen beispielsweise um in Stoßstangen oder Zierleisten angeordnete Ultraschallsensoren handeln. Das Fahrassistenzsystem kann beispielsweise als Einparkassistent ausgeführt sein, und nutzt die Sensoranordnungen, um Informationen über die Umgebung des Fahrzeugs zu erhalten.

Durch die verdeckte Anordnung der Sensoren wird die Funktion des Fahrassistenzsystems gewährleistet und gleichzeitig ein für den Nutzer ansprechendes Fahrzeugdesign ermöglicht. Dabei werden durch den Einsatz der akustischen Koppelplatte die Anforderungen an die Fertigungsgenauigkeit der flächigen Fahrzeugkomponente gering gehalten. Im Falle eines Ausfalls eines Sensors ist ein Austausch auf einfache Weise möglich, da ein Verkleben der Sensormembran vermieden wird und der Sensor über eine leicht lösbare mechanische Schnappverbindung gehalten wird.

### Kurze Beschreibung der Zeichnungen

Ausführungsbeispiele der Erfindung sind in den Zeichnungen dargestellt und der nachfolgenden Beschreibung näher erläutert.
Figur 1 zeigt eine Ausführungsform der erfindungsgemäßen Sensoranordnung mit einem Ultraschallsensor, der gegen eine flächige Fahrzeugkomponente gedrückt wird.
Figuren 2a und 2b zeigen das von der flächigen Fahrzeugkomponente, akustischer Koppelplatte, Membran und Piezoelement gebildete schwingende System einmal im Ruhezustand und einmal im maximal ausgelenktem Zustand.

### Ausführungsformen der Erfindung

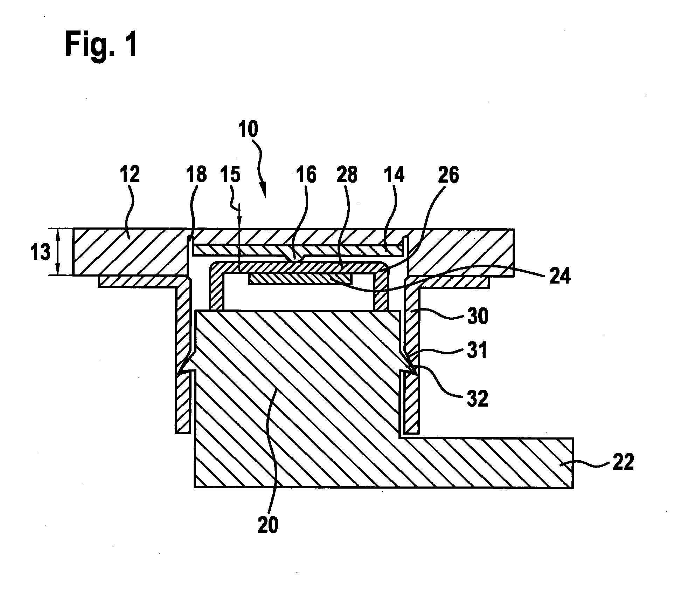

Figur 1 zeigt eine Sensoranordnung umfassend eine flächige Fahrzeugkomponente und einen Ultraschallsensor.

Die Sensoranordnung 10 umfasst einen Ultraschallsensor 20 der gegen eine flächige Fahrzeugkomponente 12 gedrückt wird. Die flächige Fahrzeugkomponente 12 ist in dem Bereich, in dem der Ultraschallsensor 20 angeordnet ist, in einer reduzierten Dicke 15 ausgeführt. Außerhalb des Bereichs, in dem der Ultraschallsensor 20 angeordnet ist, ist die flächige Fahrzeugkomponente 12 in der normalen Dicke 13 ausgeführt.

Zwischen dem Ultraschallsensor 20 und der flächigen Fahrzeugkomponente 12 ist eine akustische Koppelplatte 14 angeordnet. Die akustische Koppelplatte 14 ist mit der flächigen Fahrzeugkomponente 12 vollflächig über ein geeignetes Verfahren, insbesondere Kleben, verbunden. An der dem Ultraschallsensor 20 zugewandten Seite weist die akustische Koppelplatte 14 in der in Figur 1 dargestellten Ausführungsform eine Erhebung 16 auf, die als Kontaktierungspunkt zu einer Membran 28 des Ultraschallsensors 20 dient. Die Verbindung der Kontaktierungsstelle 16 und der Membran 28 ist lösbar ausgeführt.

In der in Figur 1 dargestellten Ausführungsform ist die Membran 28 als Membrantopf 26 ausgeführt. An der Unterseite der Membran 28, d.h. am Boden des Membrantopfs 26, ist ein Piezoelement 24 angeordnet. Über das Piezoelement 24 kann die Membran 28 in Schwingung versetzt werden. Schwingungen der Membran 28 können wiederum durch das Piezoelement 24 in ein elektrisches Signal umgewandelt werden. Schwingungen der Membran 28 werden über den Kontaktierungspunkt 16 auf die akustische Koppelplatte 14 und damit auf die mit der akustischen Koppelplatte 14 verbundene flächige Fahrzeugkomponente 12 übertragen. Somit ist es dem Ultraschallsensor 20 möglich, Schallwellen auszusenden. Umgekehrt können einfallende Schallwellen die flächige Fahrzeugkomponente 13 im Bereich des Ultraschallsensors 20 in Schwingung versetzen, wobei die Schwingungen über die akustische Koppelplatte 14 und den Kontaktierungspunkt 16 auf die Membran 28 des Ultraschallsensors 20 übertragen werden.

In der Figur 1 dargestellten Ausführungsform sind an der flächigen Fahrzeugkomponente 12 im Bereich des Übergangs zwischen dem Bereich mit normaler Dicke 13 und dem Bereich mit reduzierter Dicke 15 Nuten 18 angeordnet. Durch die Nuten 18 wird eine Übertragung von Körperschall von den Bereichen mit normaler Dicke 13 auf den Bereich mit reduzierter Dicke 15 reduziert. Zur Befestigung des Ultraschallsensors 20 ist eine Halterung 30 vorgesehen, die bevorzugt an einem Bereich mit normaler Dicke 13 mit der flächigen Fahrzeugkomponente 12 verbunden ist. An der Halterung 30 sind Aussparungen 31 angeordnet in die Halteclips 32 des Ultraschallsensorgehäuses 22 einrasten können. Dabei sind die Halteclips 32 und die Ausnehmungen 31 so ausgeführt, dass die mechanische Verbindung zwischen dem Ultraschallsensorgehäuse 22 und der Halterung 30 wieder gelöst werden kann.

Da die Membran 28 des Ultraschallsensors 20 nicht mit der flächigen Fahrzeugkomponente 12 verklebt ist, und sich die mechanische Verbindung zwischen Halteclips 32 und der Halterung 30 einfach lösen lässt, kann der Ultraschallsensor 20 im Falle eines Defekts leicht von der flächigen Fahrzeugkomponente 12 gelöst werden. Zudem bleibt die dem Ultraschallsensor abgewandte Seite der flächigen Fahrzeugkomponente geschlossen, was es ermöglicht, den Ultraschallsensor 20 unsichtbar in beispielsweise als Stoßfänger oder Zierleisten ausgeführte flächige Fahrzeugkomponenten zu integrieren.

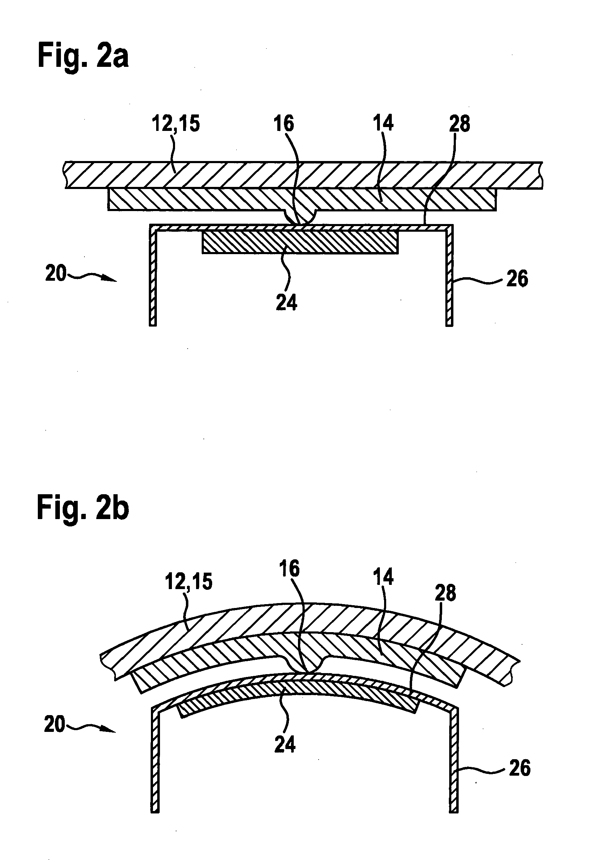

Figuren 2a und 2b zeigen das schwingende System, gebildet aus der flächigen Fahrzeugkomponente, der akustischen Koppelplatte und der Membran des Ultraschallsensors in der Ruhelage und in der maximal ausgelenkten Position.

Figur 2a zeigt den Bereich mit reduzierter Dicke 15 einer flächigen Fahrzeugkomponente 12, an dessen Unterseite die akustische Koppelplatte 14 angeordnet ist. Die akustische Koppelplatte 14 kontaktiert die Membran 28 eines Ultraschallsensors 20 am Kontaktierungspunkt 16. Die Membran 28 des Ultraschallsensors 20 ist als Membrantopf 26 ausgeführt. Der Ultraschallsensor 20 weist des Weiteren ein Piezoelement 24 auf, welches an der Unterseite der Membran 28 angebracht ist. Bei Anregung des Piezolements 24 wird die Membran 28 in Schwingung versetzt und dadurch ausgelenkt. Über den Kontaktierungspunkt 16 wird die Schwingung auf die akustische Koppelplatte 14 und durch diese auf die damit verbundene flächige Fahrzeugkomponente 12 übertragen. Der Bereich mit reduzierter Dicke 15 der flächigen Fahrzeugkomponente 12, die akustische Koppelplatte 14 und die Membran 28 des Ultraschallsensors 20 bilden ein schwingendes System. In der in Figur 2a dargestellten Situation ist das System in Ruhe dargestellt. Alle Komponenten des schwingenden Systems nehmen ihre Grundposition ein und sind nicht ausgelenkt.

Figur 2b zeigt das schwingende System, gebildet aus dem Bereich mit reduzierter Dicke 15 der flächigen Fahrzeugkomponente 12, der akustischen Koppelplatte 14 und der Membran 28 in einem maximal ausgelenktem Zustand. Über das Piezoelement 24 wird die Membran 28 des Ultraschallsensors 20 zu einer Schwingung angeregt. In Figur 2b ist die Membran 28 in einem Zustand dargestellt, in der diese maximal nach obenhin ausgelenkt ist. Die akustische Koppelplatte 14 berührt die Membran 28 mit ihrem Kontaktierungspunkt 16 an der Stelle, an der die Schwingung der Membran 28 ihre maximale Amplitude aufweist. Die Schwingung der Membran 28 wird über den Kontaktierungspunkt 16 auf die akustische Koppelplatte 14 und durch diese auf die flächige Fahrzeugkomponente 12 übertragen.

Durch die nur punktförmig erfolgende Verbindung zwischen dem Membran 28 und der akustischen Koppelplatte 14 ist das schwingende Gesamtsystem weniger steif als dies bei einer vollflächigen Verbindung zwischen akustischer Koppelplatte 14 und Membran 28 der Fall wäre. Dadurch wird einer Auslenkung der Membran weniger Wderstand entgegengesetzt.

## Patentansprüche

1. Sensoranordnung (10) umfassend eine flächige Fahrzeugkomponente (12) und einen Ultraschallsensor (20), wobei der Ultraschallsensor (20) eine Membran (28) umfasst, die lösbar mit der flächigen Fahrzeugkomponente (12) verbunden ist, und wobei die flächige Fahrzeugkomponente (12) im Bereich des Ultraschallsensors (20) eine reduzierte Materialstärke (15) aufweist, **dadurch gekennzeichnet, dass** die flächige Fahrzeugkomponente (12) eine akustische Koppelplatte (14) umfasst, die an den Ultraschallsensor (20) angrenzt und dessen Membran (28) punktförmig kontaktiert, wobei die akustische Koppelplatte (14) eine Erhebung aufweist, welche die Membran (28) des Ultraschallsensors (20) an dem Punkt kontaktiert, an dem die Amplitude der Schwingungen maximal ist.

2. Sensoranordnung nach Anspruch 1, **dadurch gekennzeichnet, dass** die Resonanzfrequenz der flächigen Fahrzeugkomponente (12) durch die akustische Koppelplatte (14) vorgegeben ist.

3. Sensoranordnung nach Anspruch 2, **dadurch gekennzeichnet, dass** die Resonanzfrequenz der flächigen Fahrzeugkomponente (12) über die Materialauswahl und Formgebung der akustischen Koppelplatte (14) vorgegeben wird.

4. Sensoranordnung nach einem der Ansprüche 1 bis 3, **dadurch gekennzeichnet, dass** die akustische Koppelplatte (14) aus Keramik oder einem kohlenstofffaserverstärkten Kunststoff gefertigt ist.

5. Sensoranordnung nach Anspruch 4, **dadurch gekennzeichnet, dass** Keramik ausgewählt ist aus Aluminiumoxid, Siliziumcarbid oder Siliziumnitrid.

6. Sensoranordnung nach einem der Ansprüche 1 bis 5, **dadurch gekennzeichnet, dass** die flächige Fahrzeugkomponente (12) am Übergang zum Bereich mit reduzierter Materialstärke (15) eine Nut (18) aufweist.

7. Sensoranordnung nach einem der Ansprüche 1 bis 6, **dadurch gekennzeichnet, dass** die Membran (28) des Ultraschallsensors (20) radialsymmetrisch, oval oder rechteckig ausgeführt ist.

8. Sensoranordnung nach einem der Ansprüche 1 bis 7, **dadurch gekennzeichnet, dass** die Membran des (28) Ultraschallsensors (20) als Membrantopf (26) ausgeführt ist.

9. Sensoranordnung nach einem der Ansprüche 1 bis 8, **dadurch gekennzeichnet, dass** die flächige Fahrzeugkomponente (12) eine Halterung (30) für den Ultraschallsensor (20) umfasst, wobei die Halterung (30) eingerichtet ist, den Ultraschallsensor (20) gegen die akustische Koppelplatte (14) zu drücken.

10. Sensoranordnung nach Anspruch 9, **dadurch gekennzeichnet, dass** die Verbindung zwischen der Halterung (30) und dem Ultraschallsensor (20) über eine lösbare Schnappverbindung (31, 32) erfolgt.

11. Sensoranordnung nach einem der Ansprüche 1 bis 10, **dadurch gekennzeichnet, dass** die flächige Fahrzeugkomponente (12) eine Stoßstange, ein Spiegel, eine Lampe oder eine Zierleiste ist.

12. Fahrzeug umfassend eine oder mehrere Sensoranordnungen (10) nach einem der Ansprüche 1 bis 11 sowie ein Fahrassistenzsystem, welches mit der mindestens einen Sensoranordnung (10) verbunden ist.

## Claims

1. Sensor assembly (10) comprising a flat vehicle component (12) and an ultrasound sensor (20), wherein the ultrasound sensor (20) comprises a diaphragm (28) which is detachably connected to the flat vehicle component (12), and wherein the flat vehicle component (12) has a reduced material thickness (15) in the region of the ultrasound sensor (20), **characterized in that** the flat vehicle component (12) comprises an acoustic coupling plate (14) which adjoins the ultrasound sensor (20) and whose diaphragm (28) is in contact in a punctiform fashion, wherein the acoustic coupling plate (14) has an elevated portion which makes contact with the diaphragm (28) of the ultrasound sensor (20) at that point at which the amplitude of the oscillations is at a maximum.

2. Sensor assembly according to Claim 1, **characterized in that** the resonant frequency of the flat vehicle component (12) is predefined by the acoustic coupling plate (14).

3. Sensor assembly according to Claim 2, **characterized in that** the resonant frequency of the flat vehicle component (12) is predefined by means of the material selection and shaping of the acoustic coupling plate (14).

4. Sensor assembly according to one of Claims 1 to 3, **characterized in that** the acoustic coupling plate (14) is fabricated from ceramic or a carbon-fibre-reinforced plastic.

5. Sensor assembly according to Claim 4, **characterized in that** the ceramic is selected from aluminium oxide, silicon carbide or silicon nitride.

6. Sensor assembly according to one of Claims 1 to 5, **characterized in that** the flat vehicle component (12) has a groove (18) at the junction with the region with the reduced material thickness (15).

7. Sensor assembly according to one of Claims 1 to 6, **characterized in that** the diaphragm (28) of the ultrasound sensor (20) is embodied in a radially symmetrical, oval or rectangular fashion.

8. Sensor assembly according to one of Claims 1 to 7, **characterized in that** the diaphragm (28) of the ultrasound sensor (20) is embodied as a diaphragm pot (26).

9. Sensor assembly according to Claims 1 to 8, **characterized in that** the flat vehicle component (12) comprises a mount (30) for the ultrasound sensor (20), wherein the mount (30) is configured to press the ultrasound sensor (20) against the acoustic coupling plate (14).

10. Sensor assembly according to Claim 9, **characterized in that** the connection between the mount (30) and the ultrasound sensor (20) is made via a detachable snap-in connection (31, 32).

11. Sensor assembly according to one of Claims 1 to 10, **characterized in that** the flat vehicle component (12) is a bumper, a mirror, a lamp or a decorative strip.

12. Vehicle comprising one or more sensor assemblies (10) according to one of Claims 1 to 11, and a vehicle assistance system which is connected to the at least one sensor assembly (10).

## Revendications

1. Agencement de capteur (10) comprenant un composant de véhicule plat (12) et un capteur à ultrasons (20), le capteur à ultrasons (20) présentant une membrane (28) qui est connectée de manière détachable au composant de véhicule plat (12), et le composant de véhicule plat (12) présentant une épaisseur de matériau (15) réduite dans la région du capteur à ultrasons (20), **caractérisé en ce que** le composant de véhicule plat (12) comprend une plaque de couplage acoustique (14) qui est adjacente au capteur à ultrasons (20) et qui vient en contact ponctuel avec sa membrane (28), la plaque de couplage acoustique (14) présentant un rehaussement qui vient en contact avec la membrane (28) du capteur à ultrasons (20) au niveau du point auquel l'amplitude des oscillations est maximale.

2. Agencement de capteur selon la revendication 1, **caractérisé en ce que** la fréquence de résonance du composant de véhicule plat (12) est prédéfinie par la plaque de couplage acoustique (14).

3. Agencement de capteur selon la revendication 2, **caractérisé en ce que** la fréquence de résonance du composant de véhicule plat (12) est prédéfinie par le choix du matériau et la forme de la plaque de couplage acoustique (14).

4. Agencement de capteur selon l'une quelconque des revendications 1 à 3, **caractérisé en ce que** la plaque de couplage acoustique (14) est fabriquée en céramique ou en un plastique renforcé par des fibres de carbone.

5. Agencement de capteur selon la revendication 4, **caractérisé en ce que** l'on choisit la céramique à partir d'oxyde d'aluminium, de carbure de silicium ou de nitrure de silicium.

6. Agencement de capteur selon l'une quelconque des revendications 1 à 5, **caractérisé en ce que** le composant de véhicule plat (12) présente une rainure (18) au niveau de la transition vers la région d'épaisseur de matériau réduite (15).

7. Agencement de capteur selon l'une quelconque des revendications 1 à 6, **caractérisé en ce que** la membrane (28) du capteur à ultrasons (20) est réalisée sous forme radialement symétrique, ovale ou rectangulaire.

8. Agencement de capteur selon l'une quelconque des revendications 1 à 7, **caractérisé en ce que** la membrane (28) du capteur à ultrasons (20) est réalisée sous forme de cuvette de membrane (26).

9. Agencement de capteur selon l'une quelconque des revendications 1 à 8, **caractérisé en ce que** le composant de véhicule plat (12) comprend une fixation (30) pour le capteur à ultrasons (20), la fixation (30) étant prévue pour presser le capteur à ultrasons (20) contre la plaque de couplage acoustique (14).

10. Agencement de capteur selon la revendication 9, **caractérisé en ce que** la connexion entre la fixation (30) et le capteur à ultrasons (20) a lieu par le biais d'une connexion à encliquetage libérable (31, 32).

11. Agencement de capteur selon l'une quelconque des revendications 1 à 10, **caractérisé en ce que** le composant de véhicule plat (12) est une tige-poussoir, un rétroviseur, une lampe ou une baguette décorative.

12. Véhicule comprenant un ou plusieurs agencements de capteur (10) selon l'une quelconque des revendications 1 à 11, ainsi qu'un système d'aide à la conduite, qui est connecté à l'au moins un agencement de capteur (10).
